# EUROPEAN PATENT SPECIFICATION

(11) **EP 1 836 290 B1**
(45) Date of publication and mention of the grant of the patent: **22.10.2014**
(21) Application number: 06700318.6
(22) Date of filing: 03.01.2006
(51) Int. Cl.: C11D 17/00, C11D 3/20, C11D 3/10, C11D 3/40, C11D 3/37, B29C 47/06, B29C 47/04, B29C 69/02, B29C 43/00

(54) **LAVATORY CLEANSING BLOCK**
TOILETTENBLOCK
PASTILLE DE NETTOYAGE DE TOILETTES

(30) Priority: 31.12.2004 GB 0428559
(43) Date of publication of application: 26.09.2007
(73) Proprietor: Jeyes Group Limited, Norfolk IP24 1HF (GB)
(72) Inventor: STUART, David, Norfolk IP22 2BB (GB); WILSON, Brian, Jeyes Group Limited, East Kilbride, Glasgow G75 0SB (GB)
(74) Representative: Gordon, Kirsteen Helen
(86) International application number: PCT/GB2006/000024
(87) International publication number: WO 2006/070209

(56) References cited:
- EP-A- 0 055 100
- EP-A- 1 418 225
- WO-A-00/34432
- WO-A-00/58434
- DE-A1- 4 439 677
- GB-A- 2 333 778
- GB-A- 2 364 267
- US-A- 4 043 931
- US-A- 5 759 974
- US-A- 5 863 876
- US-B1- 6 806 244

## Description

The present invention relates to a lavatory cleansing block.

Typically, lavatory cleansing blocks are immersed in the water cistern of a lavatory (an in-tank or in-cistern block), or held in a cage under the rim of the lavatory bowl (a rim block), or sometimes in a cage on the top of the cistern, in Japan for example, (an on-tank block). The block dissolves slowly, releasing active ingredients into the lavatory bowl.

Generally such blocks may contain as active ingredients one or more of:
i) a surface active agent to provide a cleansing effect, and also to provide foam as an indicator to the user;
ii) a bleach component;
iii) a colourant primarily as an indicator to the user;
iv) a perfume;
v) a germicide;
vi) limescale controller

Lavatory cleansing blocks are described, for example, in DE-A-4439677, GB-A-2333778, EP-A-0055100, EP-A-1418225, WO 00/34432, US 6806244, WO 00/58434, US5863876, US 4043931 and US 5759974.

It will be appreciated that the extent to which the block provides a cleansing action pre se depends on the active ingredients used and the quantity dosed into the lavatory bowl during a flush cycle.

The block will also contain processing aids to assist in manufacture of the block by extrusion, tableting, etc, fillers and also solubility controllers to control the lifetime of the block.

The in use life of the block is governed in particular by the amount of material in the block and the rate at which the block dissolves in the flush water and this depends primarily on the composition of the block.

Also, the block life will depend in part on the hardness of the flush water, the ambient temperature, the frequency of flushing and even the toilet design. These factors are well known in the art and the block composition can be tested against a range of conditions when determining a suitable composition for a particular market.

The quantity of active ingredients delivered into the toilet bowl during each flush cycle of the toilet will in turn affect the actual and perceived performance of the block: for example the action of a surfactant or bleach to cleanse the toilet bowl, and the appearance of foam or dye to the user, or perception of a fragrance.

For typical domestic use, the preferred life of the block is about 28 days. For some applications, an in use lifetime of several months is required.

It is difficult to balance the effective and/or perceived cleansing performance against the desired block life, while maintaining a viable or economic block size and an even block performance over the major portion of the lifetime of the block.

By the rate at which a block part dissolves we mean the effective lifetime of the block or block part in use, not the absolute rate at which a component goes into solution. The dissolution of the block part, i.e. the end of life, can be measured in a number of ways. Visual inspection of the block part is often a good indicator, and the end of life of the block or block portion can be taken to be when there are no visible remains of the block.

In some very hard water environments, the fillers or solubility control agents may remain in place in the toilet cistern or the block cage after the active ingredients have been exhausted, thus making a visible determination more difficult. Another approach to determining lifetime is to remove the block part and measure the fall in the active ingredient content. Another way of measuring the end of life of the block part is to detect a fall off in the concentration of the active ingredients in the flush water. This can be a simple visual test - for example there is no longer any foam in the toilet flush water, any visual colourisation or any smell - or by a chemical analytical test. Thus, for example, if the amount of an active ingredient in the block part of the flush water falls to less than 90% of an initial value, it can be assumed that the block part has reached or is very close to its effective end of life. When measuring the concentration of the active component in the flush water it will be appreciated by those in the art that this will depend in part on the length of time between flushes.

A first aspect of the present invention provides a lavatory cleansing block (1) comprising a body (2) formed from a first composition, the body (2) having at least one aperture therethrough which contains a core (3) formed from a second composition, and wherein the first composition comprises a solubility control agent which retards dissolution and the second composition comprises a component which accelerates dissolution and dissolves at a faster rate in use than the first composition, and the second composition comprises an active ingredient selected from perfume, colourant and foam producing surfactant to increase the perceived initial cleansing power or activity of the block (1).

A plurality of one or both block parts may be provided. For example, the composition of one block part may be provided in a plurality of apertures and/or recesses in the second block part.

The compositions of the block parts dissolve at different rates. The core dissolves over a short period of time and produces a relatively higher concentration of perfume, colourant or foam producing surfactant in the flush water to give greater perceived initial cleansing power or activity of the block. The other block part produces a lower concentration of active ingredients in the flush water over the block's in-use life.

We particularly prefer to utilise our invention with an in-tank block, although in the bowl blocks and on-tank blocks may also be formulated.

The perceived benefit of a block can be as important as the actual effect of the active ingredients, such as the cleansing power of the block, in determining the commercial success of a block. Accordingly, the composition which dissolves more rapidly, i.e. has a shorter in-use lifetime, comprises an active ingredient selected from perfume, colourant or a foam-producing surfactant to increase the perceived initial cleansing power or activity of the block.

The different block parts may provide different active ingredients into the flush water. Thus, for example, one block part may provide a high concentration of a limescale control agent or a bleach, and the other block part a surfactant. One or both block parts may contain a colorant to dye the flush water to indicate to the user that the block is active. The block parts may have different colour colourants or provide a different dosage of colourant to the flush water to produce different colour intensity. Preferably the faster dissolving block part provides more intense colour, such as by providing a higher concentration of colourant, to the flush water.

The block part which dissolves more rapidly comprises a component which accelerates dissolution. Such a component may comprise citric acid and/or sodium bicarbonate. These ingredients accelerate dissolution and they may also create visible effervescence or bubbling from the block, thereby increasing the perceived initial performance of the block. The composition may comprise a relatively low content of less soluble components such as salts, fillers and hydrophobes to facilitate more rapid dissolution.

The composition which dissolves less rapidly comprises a relatively higher proportion of a solubility control agent such as hydrophobes or salts to retard dissolution.

The faster dissolving component provides a higher impact on the user compared to the other component by delivering an active ingredient selected from perfume, colourant and foam producing surfactant, which will be readily noticed by the user for a short period, for example one to three days, as indicating an effective initial cleansing action. It may also be possible to use an active ingredient which may give an indication, such as smell or colour, which is too strong for a user to tolerate over a block life of four weeks, say, but will be tolerated for a few days.

In general, we have found that conventional block ingredients may be used for the block parts. The ingredients are selected according to the desired properties of the block part (e.g. bleaching, foaming, fragrancing, anti-limescale, etc), and block lifetime. The relative amounts of the ingredients and the weight of the block parts are adjusted to provide the desired concentration of active ingredients into the flush water and to provide the desired in-use lifetime.

Solubility control agents which retard dissolution are well known. Examples include saturated organic materials or highly chlorinated organic materials. Examples of solubility agents which may be employed include polyethylene waxes; fatty alcohols; fatty acids; low ethoxylates (e.g. containing up to 4 ethylene oxide units per mole) of fatty alcohols and alkylphenols; paradichlorobenzene; and esters which resist hydrolysis such as methyl salicylate and isobornyl acetate.

A surface active agent (surfactant) may be included in either or both of the compositions of block parts. The same surface active agent may be used in each composition, or different agents may be used. More than one surface active agent may be used in each composition. Typical surface active agents include anionics such as alkali metal paraffin sulphonates, alkali metal alkyl sulphates and alkyl aryl sulphonates, particularly alkyl benzene sulphonates. Preferably the total concentration of surface active agent is from about 5 to about 75% by weight of the block part, preferably about 20 to about 60%, and more preferably about 30 to about 50%. The amounts refer to the amount of active surface active agent. In the following examples we specify the weight per cent of the surface active agent composition. Typically a surface active agent is supplied as X% active, i.e. X% of the composition is the required surface active agent, and so 100g of an '80% active' surface active agent composition would provide 80g of surface active agent.

The concentration of surface active agent in the composition which dissolves less rapidly may be greater than the concentration of surface active agent in the composition which dissolves more rapidly in order to ensure satisfactory maintenance cleaning.

A bleach may be included in either or both of the two compositions. Preferably the bleach is a halogen release agent. Preferably the halogen release agent is a chlorine release agent, more preferably a chlorinated cyanuric acid derivative such as sodium dichloroisocyanurate. Preferably the bleaching agent is present in an amount of from 2 to 75% by weight of the block part, preferably 5 to 60% and more preferably 10 to 40% by weight. Where a perfume or colourant which is not bleach-stable is used, bleach is preferably included in only one of the two compositions. The perfume and/or colourant may then be included in the other composition.

A colourant may be included in either or both of the two compositions. As noted above, if the colourant is not bleach-stable, then it is preferably included in a composition which does not include bleach. The colourant may provide colour to the flush water if a sufficient amount is dispersed during a flushing operation, but the colourant also provides an attractive appearance to the finished block when it is on-shelf. In addition, if a different colourant is used for the two compositions, the colourant will provide a visual distinction between the two compositions.

A perfume may be included in either or both of the two compositions. As noted above, if the perfume is not bleach-stable, then it is preferably included in a composition which does not include bleach. The perfume is preferably present in an amount of from about 0.5 to about 15% by weight of the final block part, preferably about from 2 to about 10%, and more preferably from about 3 to about 7% by weight. Where the perfume includes a carrier oil, we include the carrier oil in the % wt noted above.

Other components of the block may include processing aids, fillers, and water softening agents, as known in the art. It will be appreciated that each part of the block will, because of the different active components, impose different constraints on the required processing aids etc.

The slower dissolving block part, that is the block part having the longer in-use lifetime, will usually be of higher volume and a solid to enable the block to be handled, but the composition having a shorter in-use lifetime, may be a solid, a gel or liquid. A gel or liquid may be encapsulated in a water soluble sac or capsule. The block parts may be separate but very preferably the block parts are integrated to form a single unit for handling by the user.

The faster dissolving block part is held as a core in the body of the other block part. The core will then dissolve before the body. As the core dissolves, the exposed surface area of the body will increase, with the result that the rate of dissolution of the slower-dissolving body will increase after the one block part has been dissolved.

The core may project from at least one side of the block in order to provide a visual distinction between the core and the body and also increase the surface area in contact with the flush water.

The rate at which the body and core dissolve will be determined not only by the inherent solubility of the active ingredients and the impact of the solubility control agents in the first and second compositions, but also by the shape and relative dimensions of the body and core and the surface areas exposed to the flush water, and also the quantity of material including the weight of material and the degree of compaction.

As noted above, other environmental factors affect the in-use lifetime of a block or block part, such as water hardness, flush frequency, temperature, toilet type. In producing a toilet block, the manufacturer will aim for a particular lifetime in a typical set of conditions, and tailor the block composition to the average or typical conditions in a market, as is well known in the art. Thus, a different block formulation may be use for non-temperate climates compared to temperate ones, for soft water areas compared to hard water areas, etc.

Thus one measure of block life utilises a UK style, 9 litre flush toilet cistern with a domestic flush pattern of 17 flushes per day, at 10 to 12 degrees centigrade, and 250ppm water hardness measured as Calcium Carbonate, to simulate the typical lifetime expected in a UK environment, but the parameters may be varied to suit other environments, as well known in the art. The block formulation, particularly the solubility control agents, will be varied to produce the desired lifetime of each component, and the active ingredient quantity varied to produce the desired dosing of active ingredient into the toilet cistern.

For example, the composition of the first and second block parts and the weight, shape and dimensions may be selected so that, when the block is in use, one block part dissolves in less than one week, preferably in between one to three days, and the other block part dissolves in one week or more, preferably in three weeks or more.

Preferably, the block parts are co-extruded. In another embodiment, the block parts are formed separately and joined together, for example by pressing together.

EP-A-55100 shows, for example, a tablet of bleaching agent embedded in a toilet cleansing block. GB-A-2333778 and DE-A-4439677 show co-extruded blocks of two compositions and also US-A-4578207 Thus it will be appreciated that a variety of shapes of block may be provided. Each composition may occupy a respective single region of the block. The same composition may be distributed in two or more discrete regions of the block.

We have found that the performance of the two block parts is not always simply additive. In particular, if a gassing agent such as citric acid or sodium bicarbonate is used to cause rapid dissolution of one block part, this may cause more rapid dissolution of the adjacent regions of the other block part. Conversely, as the volume of the one block part diminishes, there is a risk of the other block part swelling or flowing to cover the one block part, slowing dissolution of the one part.

When one block part is surrounded by the other block part, then it is preferably that the one block part does not swell substantially in use, otherwise it may break up the surrounding first block part.

For ease of manufacture and formulation we prefer a block utilising only two formulations or parts, though a part may be separated into discrete regions. A block having more than two formulations or parts may be produced, and they may be tailored to deliver different active components and/or to have different in-use lifetimes.

In one preferred formulation a two part lavatory cleansing block has:
in the first part from 40 to 80 % by weight of surfactant, preferably 45 to 55% , from 10 to 30% by weight of polyacrylate, preferably from 15 to 25%; and 0 to 20% by weight of hydrophobe, preferably from 5 to 15%; and
in the other part from 15 to 35% by weight of surfactant, preferably from 20 to 30%; from 30 to 60 % by weight of filler, preferably from 35 to 55%, and from 0 to 15% of a gassing agent, preferably 6 to 11%.

Preferably the hydrophobe is pine oil. Other preferred hydrophobes include C9-C11 primary alcohols and non-ionic surfactants. These act also as processing aids. Preferably the filler is a salt such as sodium sulphate. Preferably the gassing agent is citric acid and a bicarbonate.

An apparatus for making a lavatory cleansing block comprises means for forming a body formed from a first composition, the body having at least one aperture therethrough.

The apparatus further comprises means for forming a core formed from a second composition, the core being contained in the aperture.

The apparatus may comprise means for shaping the core so that the core projects from the body in order to provide a visual distinction between the core and the body. The means for shaping the core may comprise a stamp for applying a force to one end of the core. The means for shaping the core may also comprise a mould for shaping the other end of the core. The apparatus may comprise means for preventing the block from sticking to the stamp and/or mould such as means for cooling the block, or means for coating the block.

Other aspects and preferred features of the invention will be apparent from the following description and the accompanying claims. The invention will be further described by way of example, with reference to the accompanying drawings of which:
Figure 1 shows a first embodiment of a block according to the invention;
Figure 2 shows an apparatus for making a lavatory cleansing block according to the invention in a first operative position;
Figure 3 shows in cross-section the apparatus of Figure 2 in a second operative position to shape a block core;
Figure 4 shows an embodiment, of a shaped block according to the invention;
Figures 5a to 5e show some examples of other block shapes which may be used in embodiments of the invention; and
Figure 5f shows a comparative example of another block shape.

### Example 1

A two component block was produced from the following compositions:

### First Composition (wt%) Slower Dissolution (B119)

(80% active )Sodium alkyl benzene sulphate 30%
(92% active) Secondary alkane sulfonate 10%
Magnesium sulfate 10%
Dye acid blue 9 - 3%
Hydrophobe - pine oil - 6%
Filler (sodium sulfate) to 100%

### Second composition (wt%) Faster Dissolution

(80% active) Sodium ABS 7%
(92% active) Seconday alkane sulfonate 24%
Citric acid 4%
Sodium bicarbonate 5%
Perfume 5%
Filler (sodium sulphate) to 100%

The two compositions are prepared, and then co-extruded. The first composition is extruded to form a cylindrical body having a diameter of about 45 mm. The body has a circular aperture therethrough having a diameter of about 20 mm. The second composition is co-extruded with the first composition to form a cylindrical core which fills the aperture.

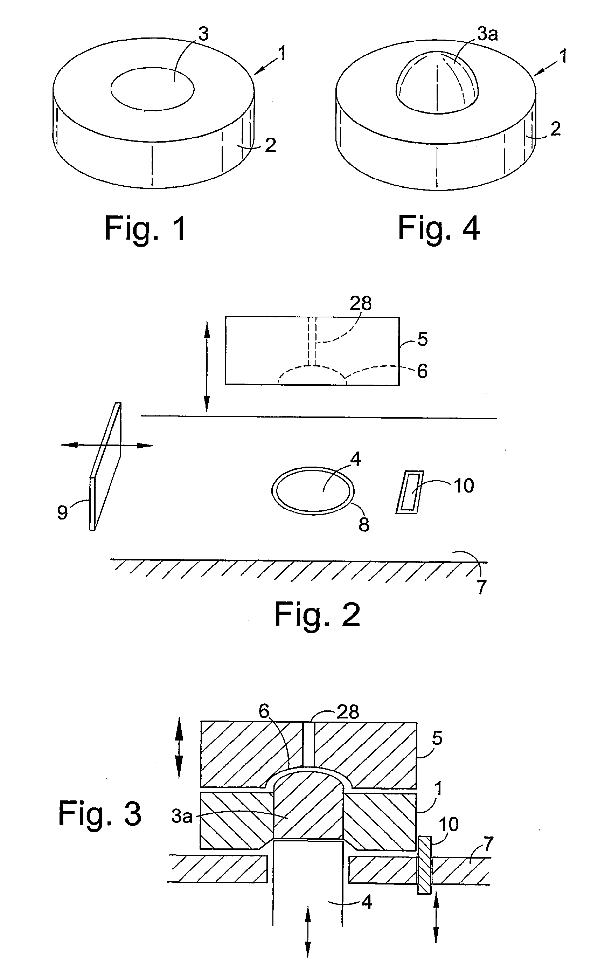

The cylindrical body is then cut into lengths to form blocks having a depth of about 20 mm. As shown in Figure 1, each block 1 has an outer body 2 and a core 3.

The blocks 1 may then be coated or wrapped in a water soluble film such as polyvinylalcohol (PVA) film, and then packed in an outer packaging, such as a cardboard and plastics blister pack, for transport and on-shelf storage. In use, the wrapped block is removed from the outer packaging and dropped into the toilet cistern, i.e. used as an in-tank block.

Alternatively, the blocks 1 may be transferred to the shaping apparatus shown in Figures 2 and 3 for shaping before or, preferably, after wrapping with the water soluble film.

The shaping apparatus includes a cylindrical stamp 4 and a mould 5. The mould 5 includes a hemi-spherical recess 6 in its underside for shaping the core 3 of a block 1 and a vent hole 28. The stamp 4 has approximately the same diameter as the core 3, as does the open end of the recess 6.

The apparatus includes a chute 7 having a circular aperture 8 formed therein. The aperture 8 has a diameter slightly larger than the diameter of the stamp 4.

The stamp 4 is reciprocally mounted beneath the aperture 8 of the chute 7 so that it can be moved between a first position in which the upper surface of the stamp is flush with the chute 7, and a second position in which the stamp 4 projects through the aperture 8 of the chute 7.

The mould 5 is reciprocally mounted above the aperture 8 of the chute 7 so that it can be moved into contact with a block 1 which is in the stamping position. The recess 6 of the mould 5 is vertically aligned with the stamp 4.

The apparatus also includes a pusher 9 for moving a block 1 so that the core 3 is accurately positioned above the stamp 4 and below the recess 6 of the mould 5.

In use, the stamp 4 is moved to its first position in which the upper surface of the stamp 4 is flush with the chute 7. The pusher 7 moves a block 1 so that its core 3 is positioned above the stamp 4 and below the aperture 6 of the mould 5. A retractable stop 10 may be provided downstream of the stamp 4 to accurately locate the block. The mould 5 is then lowered so that the lower surface of the mould 5 rests against the upper surface of the block 1. The stamp 4 is then raised into its second position in which it projects through the aperture 8 in the chute 7, and so applies a force to the lower end of the core 3. The upper end of the core 3 is pushed through the body 1 and into the recess 6 in the mould 5, which moulds the projecting end of the core 3 into a hemispherical shape. The stamp 4 and mould 5 are then retracted to their initial positions, and the block 1 is moved away from the stamping position. During this process the inner core 3 may be compacted, and there may also be some compaction of the outer block 2 if the mould 5 presses sufficiently on to the block.

After shaping, the blocks 1 may be coated or wrapped in a water soluble film such as PVA film, if this has not already been done.

As shown in Figure 4, stamping the block provides a visual distinction between the body 2 and the core 3 of the block 1. Alternatively or in addition, a visual distinction may be provided by using different colours for the two compositions.

The apparatus may include means (not shown) for preventing the block from sticking to the stamp 4 and mould 5. These means may comprise means for cooling the block or means for coating the block. The coating may comprise a powder coating (e.g. talc), or may comprise a film coating. If a film coating is used, the film is preferably water soluble so that it can be left in place by the user and will dissolve when the block is used in a lavatory. The water soluble film may include pinholes to help ensure that the film adheres to the block 1 and does not "bubble" up when the core is compressed between the stamp 4 and mould 5. The mould may be heated, preferably to about 80 degrees centigrade, and has also been found to inhibit the formation of air bubbles under the wrapping.

It will be appreciated that other shapes may be provided for the exterior of the block 1 and for the core 3.

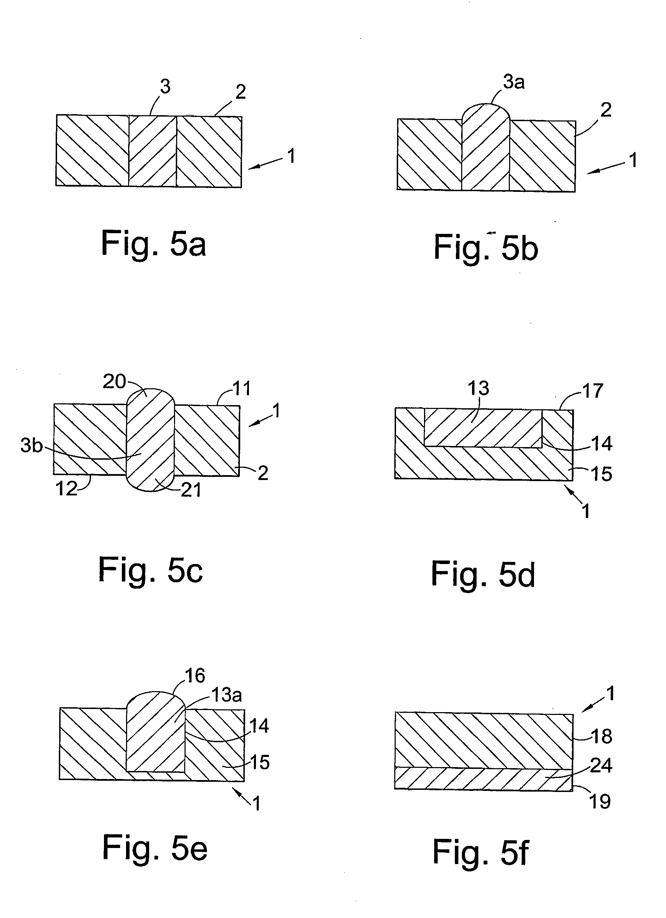

Figures 5a and 5b show cross-sections through the blocks of Figures 1 and 4 respectively.

In Figure 5c the core 3b extends above and below the major surfaces 11, 12 of the outer part 1, forming a hemi-spherical protuberance at each end 20, 21 of the core 3b.

In Figure 5d one block part 13 is provided in a recess 14 in a major surface 17 of the other block part 15. In Figure 5e, the block part 13a is provided with a dome 16 which extends above the upper surface 17 of the outer block part 15.

In the embodiments the cores 3, 3a, 13, 13a are the faster dissolving block parts, that is they have a shorter in use lifetime.

In Figure 5f, the block is formed by two contiguous block parts 18, 19.

### Examples 2 to 4

Faster dissolving block parts suitable for forming the core of 3, 3a, 13, 13a embodiments shown in Figures 1 and 2 and 5a to 5f were formulated as follows.

| Example | **2** | **3** | **4** |
|---|---|---|---|
| | **TR1883** | **TR1853** | **TR1945** |
| Material | | | |
| (80% active)Naalkylbenzenesulphonate | 12 | 7 | 0 |
| (80% active) alpha-olefin sulphonate | 19 | 24 | 30 |
| Citric Acid | 8 | 4 | 0 |
| Sodium Bicarbonate | 10 | 5 | 0 |
| Colourant | 0.05 | 0.08 | 0.05 |
| Sodium Sulphate | 45.95 | 53.92 | 64.95 |
| PerfumeF555.422 | 0 | 5 | 5 |
| Mineral oil | 1 | 0 | 0 |
| Perfume F559.808 | 5 | 0 | 0 |

A 10 gram cylindrical block of diameter about 15 mm and length about 20 mm was left immersed in 2 litres of cold hard tap water on bench in a glass beaker (10g), and the time for the block to dissolve was observed visually as follows:
TR1883 ~ 6 hours
TR1853 ~ 8 hours
TR1945 ~ 12-14 hours

A 10 gram cylindrical shape of diameter about 15 mm and length about 20 mm was housed into a central aperture formed in a typical formulation surfactant block given above in example 1 as reference B119. The finished block had a diameter of 45 mm and height 20 mm (as shown in Figure 1 herein) and weighed 50 gm. The blocks were dropped into a UK style toilet cistern (UK91) which delivers a flush of 9 litres and was flushed according to a typical domestic use pattern of 17 flushes per day for a family of four, using hard water, measured as 250ppm CaCO₃ at 10 to 12°C.

(It can be noted that for an in tank block varying the flush frequency will not ordinarily produce a pro rata change in block life. For a lower flush frequency, the concentration of active ingredient in the flush water per flush will tend to be higher. The difference in lifetime of the two block parts will be similar.)

The life of the central block part was measured visually - i.e. when the central part had disappeared, giving the following results:
TR1883n ~ 1-1.5 days
TR1853 ~ 2-3 days
TR1945 ~ 12 days

### Foam Heights in the toilet bowl:

B119/TR1883 - gave a high foam between 3 - 4 cm every flush for 1 to 1.5 days, followed by a lower foam ~1.5cm for the remainder of the block life

B119/TR1853 - gave a similarly high foam between 3 - 4cm every flush for 2 to 3 days, followed by a lower foam ~1.5cm for the remainder of the block life

B119/ TR1945 - gave no significant initial improvement in foam height - giving typically ~1.5cm foam throughout the block life.

A 50 gm. block of B119 used as a standard gave ~1.5cm foam height through the block life

The following graph shows the results of measurement of colour intensity of the flush water, produced by the dissolved colourant in the block. The colour is initially boosted by the effect of the central core dissolving to release a higher amount of colourant over a shorter period. The colour release for the two component block, after the dissolution of the first component, is slightly lower and has a shorter life than the standard B119 50gm block, due in part to the hollow central core and reduced quantity of the colourant in the remianing outer block. The %w/w of the colourant in the outer block part could be readily increased to provide more intense colouration for the remaining block life if required. 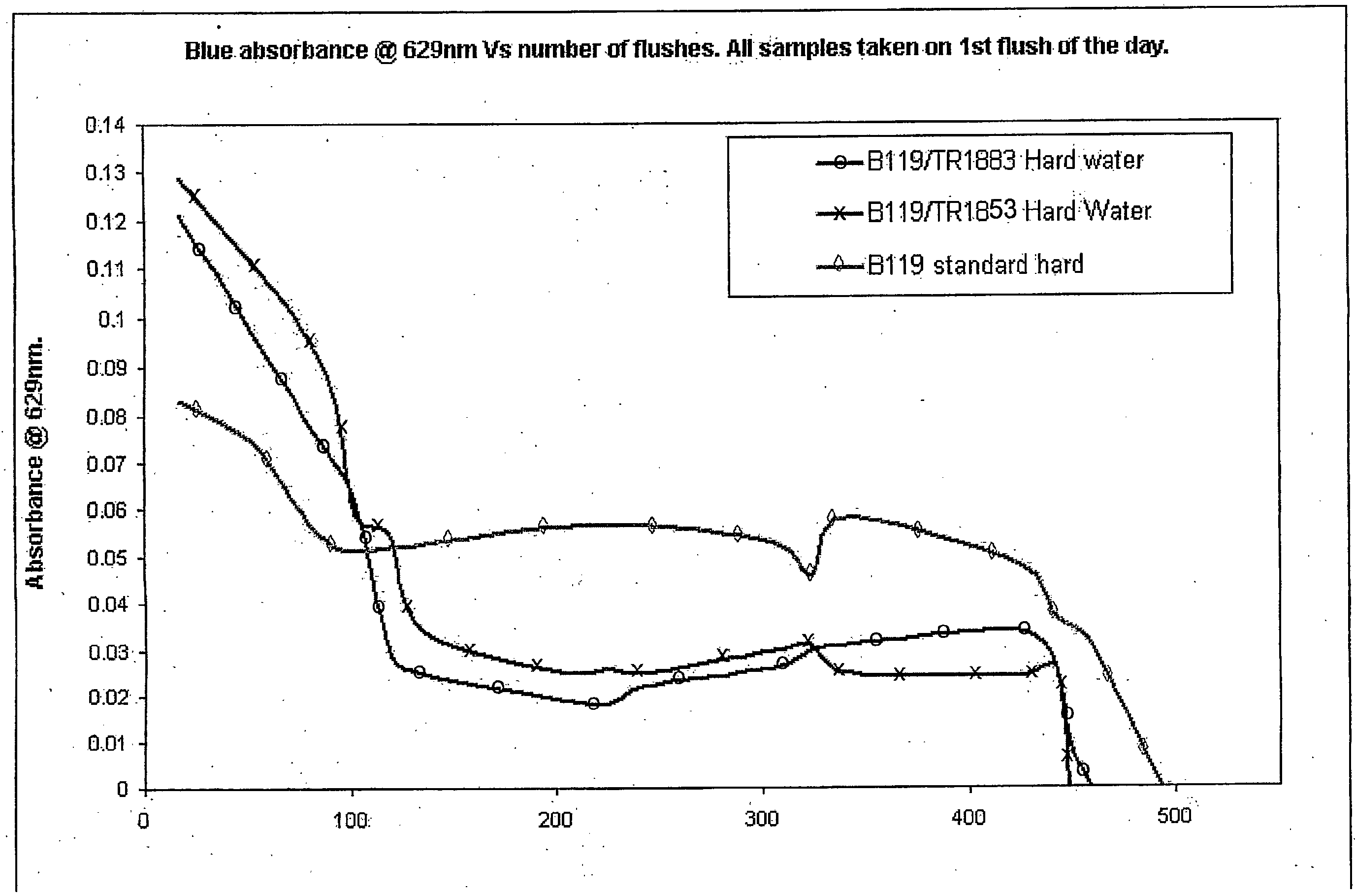 Fragrance performance was measured in fragrance booths containing blocks in standard UK cisterns and flushed as previously described. This typical high impact fragrance performance vs B119 standard was achieved throughout the life of the soluble core, as previously detailed

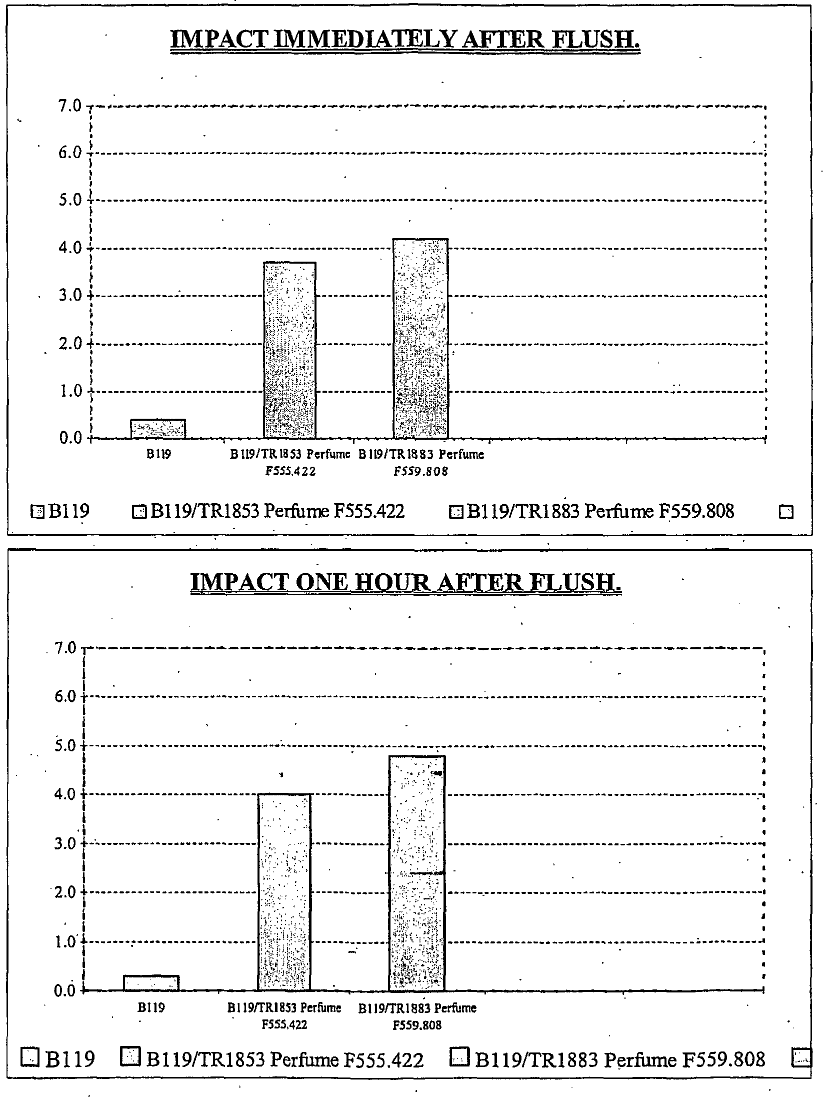

These graphs of the user perception of fragrance impact show the improved fragrance impact over a standard in cistern block product. In toilet testing the improved fragrance impact works whilst the inner block was still present.

### Example 5 (Outer formulation):

| TB3987 (3-4 week life, colourant) | %w/w |
|---|---|
| (80% active) sodium alkylarylsulphonate | 32 |
| (92% active) secondary alkanesulphonate | 10.7 |
| Magnesium sulphate | 10 |
| Titanium Dioxide | 1 |
| Acid Blue 9 | 3.5 |
| Sodium Sulphate | 36.6 |
| Pine Oil | 6 |
| OBPCP | 0.2 |

In this example of an outer formulation, the titanium dioxide is added to provide a paler colour on-shelf and also reduces smearing of the dye during manufacture.

### Example 6

A long life outer formulation was formulated as follows:

| Formula B147 | %w/w |
|---|---|
| (90% active) sodium alkylarylsulphonate | 45 |
| Calcium Sulphate | 2 |
| Magnesium Sulphate | 7 |
| Sodium Sulphate | 10.8 |
| Guar Gum | 15 |
| C9-C11 Primary Alcohol | 8.5 |
| Pine Oil | 0.5 |
| OBPCP | 0.2 |
| Acid Blue 9 | 11.0 |

In line with the previous examples, a 64mm diameter 75g block was prepared with 10g inner core using formulation TR1853 (example 3) and a 65g outer B147 as illustrated in Figure 1, and compared with a single, similarly shaped block of formulation B147 weighing 75g.

The combined block showed high foaming and fragrancing and colouring performance for the first 2 to 3 days until the core was completely dissolved, then steady colouring performance for about 14 weeks. In comparison, B147 on its own gave no fragrancing, low foam, and lower initial colouring, then steady colouring for about 16 weeks.

### Example 7

A high foaming block with an overall life time in use of 3 to 4 weeks incorporated a limescale controller (a polyacrylate) and a colourant.

High Foaming Outer Formulation (DS225), weight 35g

| | %w/w |
|---|---|
| (81% active) Sodium alkylarylsulphonate | 61.8 |
| Acid Blue 9 | 4 |
| Titanium Dioxide | 1 |
| Sodium Polyacrylate (Acusol* 445NG) | 19 |
| Pine Oil | 11 |
| OBPCP | 0.2 |
| Guar Gum | 3 |

| | |
|---|---|
| * TM Rohm & Haas | |

### High Foaming Inner Formulation (DS224), weight 5g

| | %w/w |
|---|---|
| (80% active) Sodium alpha-olefinsulphonate | 79.45 |
| 92% secondary alkane sulphonate | 10 |
| Pigment | 0.05 |
| Pine Oil | 9.5 |
| C9-C11 Primary Alcohol | 1 |

The formulations DS225 and DS 224 were co-extruded with DS 224 forming an inner core as seen in Figure 1, with the inner core having a weight of about 5g and the outer ring a weight of 35g.

The example combination of DS225/DS224 delivered high foaming, colouring and limescale control for 4 weeks, with the inner core providing increased foaming for the first two weeks, until dissolved.

### Example 8

The inner formulation DS 224 of example 7 was replaced with 8g of formulation TR 1883 from example 2. This provided a block which gave high foaming, colouring and limescale control for about 3 weeks, with the inner core delivering a increased foam and initial fragrancing for the first 1.5 days until dissolved.

As noted above the formulation of the block parts is adapted to achieve the desired lifetime of the block parts. A greater % by weight of solubility control agent such as hydrophobes, fillers and salts leading to a longer lifetime, a greater amount of active ingredient such as colourant and surfactant leading to a greater perceived level of performance during the block lifetime.

In this specification we measure the in-use life time of a block part in days, to the nearest half day for the faster dissolving part.

## Claims

1. A lavatory cleansing block (1) comprising a body (2) formed from a first composition, the body (2) having at least one aperture therethrough which contains a core (3) formed from a second composition, and wherein the first composition comprises a solubility control agent which retards dissolution and the second composition comprises a component which accelerates dissolution and dissolves at a faster rate in use than the first composition, and the second composition comprises an active ingredient selected from perfume, colourant and foam producing surfactant to increase the perceived initial cleansing power or activity of the block (1).

2. A block according to claim 1, wherein said component which accelerates dissolution comprises citric acid.

3. A block according to claim 1, wherein said component which accelerates dissolution comprises sodium bicarbonate.

4. A block according to any one of claims 1 to 3, wherein said solubility control agent comprises a hydrophobe.

5. A block according to any one of claims 1 to 4, wherein the core (3) projects from at least one side of the block (1).

6. A block according to any one of claims 1 to 5, wherein the core (3) and the body (2) have different colours.

7. A block according to any one of claims 1 to 6, wherein the body (2) is extruded.

8. A block according to claim 7, wherein the body (2) and the core (3) are co-extruded.

## Patentansprüche

1. Toilettenreinigungsblock (1), der ein Gehäuse (2) aufweist, das aus einer ersten Zusammensetzung gebildet wird, wobei das Gehäuse (2) mindestens eine Öffnung dort hindurch aufweist, die einen Kern (3) enthält, der aus einer zweiten Zusammensetzung gebildet wird, und wobei die erste Zusammensetzung ein Löslichkeitssteuermittel aufweist, das die Auflösung verzögert, und wobei die zweite Zusammensetzung eine Komponente aufweist, die die Auflösung beschleunigt und sich bei Benutzung mit einer höheren Geschwindigkeit als die erste Zusammensetzung auflöst, und wobei die zweite Zusammensetzung ein aktives Ingrediens aufweist, ausgewählt unter einem Duftstoff, Farbstoff und einer schaumbildenden oberflächenaktiven Substanz, um die wahrgenommene anfängliche Reinigungsleistung oder die Aktivität des Blockes (1) zu verstärken.

2. Block nach Anspruch 1, bei dem die Komponente, die die Auflösung beschleunigt, Zitronensäure aufweist.

3. Block nach Anspruch 1, bei dem die Komponente, die die Auflösung beschleunigt, Natron aufweist.

4. Block nach einem der Ansprüche 1 bis 3, bei dem das Löslichkeitssteuermittel ein hydrophobes Mittel aufweist.

5. Block nach einem der Ansprüche 1 bis 4, bei dem der Kern (3) aus mindestens einer Seite des Blockes (1) vorsteht.

6. Block nach einem der Ansprüche 1 bis 5, bei dem der Kern (3) und das Gehäuse (2) unterschiedliche Farben aufweisen.

7. Block nach einem der Ansprüche 1 bis 6, bei dem das Gehäuse (2) extrudiert ist.

8. Block nach Anspruch 7, bei dem das Gehäuse (2) und der Kern (3) co-extrudiert sind.

## Revendications

1. Bloc de nettoyage de toilettes (1) comprenant un corps (2) formé à partir d'une première composition, le corps (2) présentant au moins une ouverture le traversant qui contient un noyau (3) formé à partir d'une seconde composition, et dans lequel la première composition comprend un agent de commande de solubilité qui retarde une dissolution et la seconde composition comprend un composant qui accélère la dissolution et se dissout en cours d'utilisation plus rapidement que la première composition, et la seconde composition comprend un ingrédient actif sélectionné parmi un parfum, un colorant et un agent tensio-actif produisant de la mousse afin d'augmenter la puissance ou l'activité nettoyante initiale perçue du bloc (1).

2. Bloc selon la revendication 1, dans lequel ledit composant qui accélère la dissolution comprend de l'acide citrique.

3. Bloc selon la revendication 1, dans lequel ledit composant qui accélère la dissolution comprend du bicarbonate de soude.

4. Bloc selon l'une quelconque des revendications 1 à 3, dans lequel ledit agent de commande de solubilité comprend une substance hydrophobe.

5. Bloc selon l'une quelconque des revendications 1 à 4, dans lequel le noyau (3) fait saillie à partir d'au moins un côté du bloc (1).

6. Bloc selon l'une quelconque des revendications 1 à 5, dans lequel le noyau (3) et le corps (2) présente différentes couleurs.

7. Bloc selon l'une quelconque des revendications 1 à 6, dans lequel le corps (2) est extrudé.

8. Bloc selon la revendication 7, dans lequel le corps (2) et le noyau (3) sont co-extrudés.
